# EUROPÄISCHE PATENTSCHRIFT

(11) **EP 1 626 196 B1**
(45) Veröffentlichungstag und Bekanntmachung des Hinweises auf die Patenterteilung: **13.02.2008**
(21) Anmeldenummer: 05017254.3
(22) Anmeldetag: 09.08.2005
(51) Int. Cl.: F16F 15/123

(54) **Torsionsschwingungsdämpfer, insbesondere für eine Kupplungsscheibe**
Torsional damping device, in particular for a clutch disc
Dispositif amortisseur de torsion, en particulier pour un disque d'embrayage

(30) Priorität: 13.08.2004 DE 102004039258
(43) Veröffentlichungstag der Anmeldung: 15.02.2006
(73) Patentinhaber: ZF FRIEDRICHSHAFEN AG, 88046 Friedrichshafen (DE)
(72) Erfinder: Ament, Norbert, 97714 Oerlenbach (DE)

(56) Entgegenhaltungen:
- FR-A- 2 845 141

## Beschreibung

Die vorliegende Erfindung betrifft einen Torsionsschwingungsdämpfer, wie er beispielsweise in einer Kupplungsscheibe einer Kraftfahrzeugreibungskupplung eingesetzt werden kann.

Derartige Torsionsschwingungsdämpfer sind häufig zweistufig aufgebaut. Eine erste Dämpferstufe bildet dabei im Allgemeinen eine Leerlaufdämpfungsstufe, um bei vergleichsweise geringen Drehzahlen und geringer Belastung das Auftreten von Schwingungsanregungen so weit als möglich zu unterbinden. Diese Leerlaufdämpfungsstufe ist vergleichsweise weich ausgestaltet und kann somit eine Dämpfung nur im Bereich niedriger Drehmomente vorsehen. Eine zweite Dämpferstufe, im Allgemeinen als Haupt- oder Lastdämpfungsstufe bezeichnet, dient dazu, die im normalen Fahrbetrieb auftretenden Drehmomentspitzen bzw. Drehmomentschwankungen, beispielsweise erzeugt durch Lastwechselanregungen, so weit als möglich zu mindern bzw. deren Auftreten so weit als möglich zu unterbinden. Die Lastdämpfungsstufen sind jedoch für deutlich größere Drehmomente ausgelegt, so dass im Übergangsbereich zwischen der Leerlaufdämpfungsstufe und der Lastdämpfungsstufe ein Drehmomentenbereich vorhanden ist, in welchem Schwingungsanregungen nur ungenügend unterdrückt werden können. Insbesondere beim Einsatz in Kupplungsscheiben besteht ein erhebliches Problem hinsichtlich des zur Verfügung stehenden Bauraums.

Aus der FR 2 845 141 A1 ist eine gattungsbildende Kupplungsscheibe bekannt, bei der über einen mehrstufig radial übereinander angeordneten Vordämpfer innerhalb der Kupplungsscheibe der Übergang zwischen Leerlaufdämpfstufe und Lastdämpfstufe mittels einer weiteren Dämpfungsstufe angeglichen ist. Durch die Anordnung der beiden der Lastdämpfstufe vorgeschalteten Dämpfungsstufen verbleibt aber ein geringer Drehwinkelbereich innerhalb diese wirksam sind. Hierdurch wird die Entkoppelungsgüte im Leerlaufbereich auf Kosten des Überganges vermindert. Auch ist der in Radialrichtung vorhandene Bauraum durch die Lastdämpfstufe begrenzt.

Es ist die Aufgabe der vorliegenden Erfindung, einen Torsionsschwingungsdämpfer, insbesondere für eine Kupplungsscheibe, vorzusehen, der bei kompakter Baugröße ein verbessertes Schwingungsdämpfungsverhalten aufweist ohne die maximale Drehmomentübertragungsfähigkeit negativ zu beeinflussen.

Erfindungsgemäß wird diese Aufgabe gelöst indem die erste Nabenanordnung eine erste Abstützformation für die erste Dämpferelementengruppe aufweist und die zweite Nabenanordnung eine zweite Abstützformation für die erste Dämpferelementengruppe aufweist, wobei die erste Abstützformation axial folgend auf die erste Verzahnungsformation angeordnet ist oder/und die zweite Abstützformation axial folgend auf die zweite Verzahnungsformation angeordnet ist.

Eine weitere Lösung sieht vor, dass die zweite Nabenanordnung eine dritte Abstützformation für die zweite Dämpferelementengruppe aufweist und die dritte Nabenanordnung eine vierte Abstützformation für die zweite Dämpferelementengruppe aufweist, wobei die dritte Abstützformation axial folgend auf die dritte Verzahnungsformation angeordnet ist oder/und die vierte Abstützformation axial folgend auf die vierte Verzahnungsformation angeordnet ist.

Bei dem erfindungsgemäßen Torsionsschwingungsdämpfer ist von Bedeutung, dass dieser drei Dämpferstufen, jeweils umfassend eine der Dämpferelementengruppen, aufweist. Diese drei durch die konstruktive Auslegung seriell bzw. nacheinander in verschiedenen Drehmomentenbereichen wirksamen Dämpferstufen ermöglichen praktisch über den gesamten Drehmomentenbereich eine wirkungsvolle Schwingungsdämpfung und bieten weiterhin die Möglichkeit, größere Verdrehwinkel zu erzeugen, da in jeder der drei Dämpferstufen der jeweilige Eingangsbereich sich mit einem vorbestimmten Winkel bezüglich des zugeordneten Ausgangsbereichs verdrehen kann.

Um eine sehr kompakte Bauweise erlangen zu können, wird weiter vorgeschlagen, dass die zweite Nabenanordnung mit einem die zweite Verzahnungsformation aufweisenden Verzahnungsbereich die erste Nabenanordnung in ihrem die erste Verzahnungsformation aufweisenden Verzahnungsbereich radial außen umgibt oder/und dass die dritte Nabenanordnung mit ihrem die vierte Verzahnungsformation aufweisenden Verzahnungsbereich die zweite Nabenanordnung in ihrem die dritte Verzahnungsformation aufweisenden Verzahnungsbereich radial außen umgibt.

Dabei wird eine axial kompakte Baugröße bei hoher Stabilität bzw. hohem Drehmomentübertragungsvermögen dann besonders erlangbar, wenn die zweite Nabenanordnung einen Verzahnungsbereich aufweist, der an einer radialen Innenseite die zweite Verzahnungsformation aufweist und an einer radialen Außenseite die dritte Verzahnungsformation aufweist.

Bei dem erfindungsgemäßen Torsionsschwingungsdämpfer kann weiter vorgesehen sein, dass die dritte Nabenanordnung in einem Verzahnungsbereich eine fünfte Verzahnungsformation aufweist und dass ein mit der dritten Dämpferelementengruppe zusammenwirkendes Kopplungselement der dritten Nabenanordnung eine sechste Verzahnungsformation aufweist, die mit der fünften Verzahnungsformation im Wesentlichen ohne Drehbewegungsspiel in Kämmeingriff steht.

Insbesondere beim Einsatz in Kupplungsscheiben besteht ein erhebliches Problem hinsichtlich des zur Verfügung stehenden Bauraums. Um diesen sehr begrenzten Bauraum in weiter optimierter Art und Weise ausnutzen zu können, wird weiter vorgeschlagen, dass die erste Nabenanordnung eine erste Abstützformation für die erste Dämpferelementengruppe aufweist und die zweite Nabenanordnung eine zweite Abstützformation für die erste Dämpferelementengruppe aufweist, wobei die erste Abstützformation axial folgend auf die erste Verzahnungsformation angeordnet ist oder/und die zweite Abstützformation axial folgend auf die zweite Verzahnungsformation angeordnet ist, wobei dann weiter vorgesehen sein kann, dass die zweite Abstützformation die erste Abstützformation radial außen umgibt.

Bei einem auf Grund der einfachen Herstellbarkeit besonders vorteilhaften Aufbau wird vorgeschlagen, dass die erste Nabenanordnung einen Verzahnungsbereich und einen Abstützbereich aufweist, welche integral miteinander verbunden sind. Alternativ ist es möglich, dass die erste Nabenanordnung einen Verzahnungsbereich und einen Abstützbereich aufweist, welche an voneinander getrennt ausgestalteten Bauteilen vorgesehen sind. Durch Ausgestalten des Verzahnungsbereichs einerseits und des Abstützbereichs andererseits aus unterschiedlichen, gleichwohl jedoch miteinander zu verbindenden Bauteilen kann jedes dieser Bauteile mit Hinblick auf die dort auftretenden Anforderungen optimiert, insbesondere aus dem geeigneten Material aufgebaut werden.

Auch bei der zweiten Nabenanordnung kann vorgesehen sein, dass diese einen die zweite Verzahnungsformation und die dritte Verzahnungsformation aufweisenden Verzahnungsbereich aufweist und einen wenigstens die zweite Abstützformation aufweisenden Abstützbereich aufweist, welche integral miteinander verbunden sind. Alternativ ist es auch hier möglich, dass die zweite Nabenanordnung einen die zweite Verzahnungsformation und die dritte Verzahnungsformation aufweisenden Verzahnungsbereich aufweist und einen wenigstens die zweite Abstützformation aufweisenden Abstützbereich aufweist, welche an voneinander getrennt ausgestalteten Bauteilen vorgesehen sind.

Zur weiteren Optimierung der Bauraumausnutzung wird vorgeschlagen, dass die zweite Nabenanordnung eine dritte Abstützformation für die zweite Dämpferelementengruppe aufweist und die dritte Nabenanordnung eine vierte Abstützformation für die zweite Dämpferelementengruppe aufweist, wobei die dritte Abstützformation axial folgend auf die dritte Verzahnungsformation angeordnet ist oder/und die vierte Abstützformation axial folgend auf die vierte Verzahnungsformation angeordnet ist. Auch hier kann die vierte Abstützformation die dritte Abstützformation radial außen umgeben.

Die zweite Nabenanordnung kann einen die zweite Verzahnungsformation und die dritte Verzahnungsformation aufweisenden Verzahnungsbereich aufweisen sowie einen wenigstens die dritte Abstützformation aufweisenden Abstützbereich, wobei diese beiden Bereiche integral miteinander verbunden sein können, oder, wenn dies beispielsweise auf Grund der besonderen Materialauswahl vorteilhaft ist, voneinander getrennt ausgebildet sein können.

Auch bei der dritten Nabenanordnung kann ein wenigstens die vierte Verzahnungsformation aufweisender Verzahnungsbereich mit einem die vierte Abstützformation aufweisenden Abstützbereich integral miteinander ausgebildet, d.h. verbunden sein. Alternativ können auch diese beiden Bereiche an voneinander getrennt ausgebildeten Bauteilen vorgesehen sein.

Um Schwingungsanregungen insbesondere auch im Resonanzbereich mit erhöhter Wirksamkeit unterdrücken zu können, wird weiter vorgeschlagen, dass zwischen der ersten Nabenanordnung und der zweiten Nabenanordnung oder/und zwischen der zweiten Nabenanordnung und der dritten Nabenanordnung oder/und zwischen der dritten Nabenanordnung und der Drehmomentübertragungsbaugruppe eine permanent wirksame Reibeinrichtung wirkt. Alternativ oder zusätzlich ist es möglich, dass zwischen der ersten Nabenanordnung und der zweiten Nabenanordnung oder/und zwischen der zweiten Nabenanordnung und der dritten Nabenanordnung oder/und zwischen der dritten Nabenanordnung und der Drehmomentübertragungsbaugruppe eine verschleppt wirksame Reibeinrichtung wirkt. Alternativ oder zusätzlich ist es möglich, dass zwischen der ersten Nabenanordnung und der zweiten Nabenanordnung oder/und zwischen der zweiten Nabenanordnung und der dritten Nabenanordnung oder/und zwischen der dritten Nabenanordnung und der Drehmomentübertragungsbaugruppe eine verschleppt wirksame Reibeinrichtung wirkt. Es wird somit nicht nur Schwingungsenergie umgewandelt in potentielle Federenergie, sondern auch abgeführt in Reibenergie, d.h. Wärme.

Die vorliegende Erfindung betrifft ferner eine Kupplungsscheibe mit einem erfindungsgemäßen Torsionsschwingungsdämpfer. Dabei trägt die Drehmomentübertragungsbaugruppe die Reibbeläge der Kupplungsscheibe und die erste Nabenanordnung dient zur drehfesten Ankopplung einer Abtriebswelle, beispielsweise eine Getriebeeingangswelle.

Die vorliegende Erfindung wird nachfolgend mit Bezug auf die beiliegenden Zeichnungen detailliert beschrieben. Es zeigt:
- Fig. 1: eine Teil-Längsschnittansicht einer Kupplungsscheibe mit einem erfindungsgemäßen Torsionsschwingungsdämpfer;
- Fig. 2: eine Detailansicht des drehachsennahen Bereichs der in Fig. 1 gezeigten Kupplungsscheibe;
- Fig. 3: eine Querschnittansicht des drehachsennahen Bereichs der in Fig. 1 gezeigten Kupplungsscheibe in verschiedenen Schnittebenen;
- Fig. 4: eine perspektivische Ansicht eine Teils einer radial äußeren , dritten Nabenanordnung;
- Fig. 5: das in Fig. 4 gezeigte Teil in anderer perspektivischer Darstellung;
- Fig. 6: eine perspektivische Darstellung einer radial mittleren, zweiten Nabenanordnung;
- Fig. 7: das in Fig. 6 gezeigte Teil in anderer perspektivischer Ansicht;
- Fig. 8: eine perspektivische Ansicht einer radial inneren, ersten Nabenanordnung;
- Fig. 9: eine der Fig. 2 entsprechende Darstellung einer abgewandelten Ausgestaltungsform;
- Fig. 10: eine der Fig. 2 entsprechende Darstellung einer abgewandelten Ausgestaltungsform;
- Fig. 11: eine der Fig. 2 entsprechende Darstellung einer abgewandelten Ausgestaltungsform;
- Fig. 12: eine der Fig. 2 entsprechende Darstellung einer abgewandelten Ausgestaltungsform;
- Fig. 13: eine der Fig. 2 entsprechende Darstellung einer abgewandelten Ausgestaltungsform;
- Fig. 14: eine der Fig. 2 entsprechende Darstellung einer abgewandelten Ausgestaltungsform;
- Fig. 15: eine der Fig. 2 entsprechende Darstellung einer abgewandelten Ausgestaltungsform.

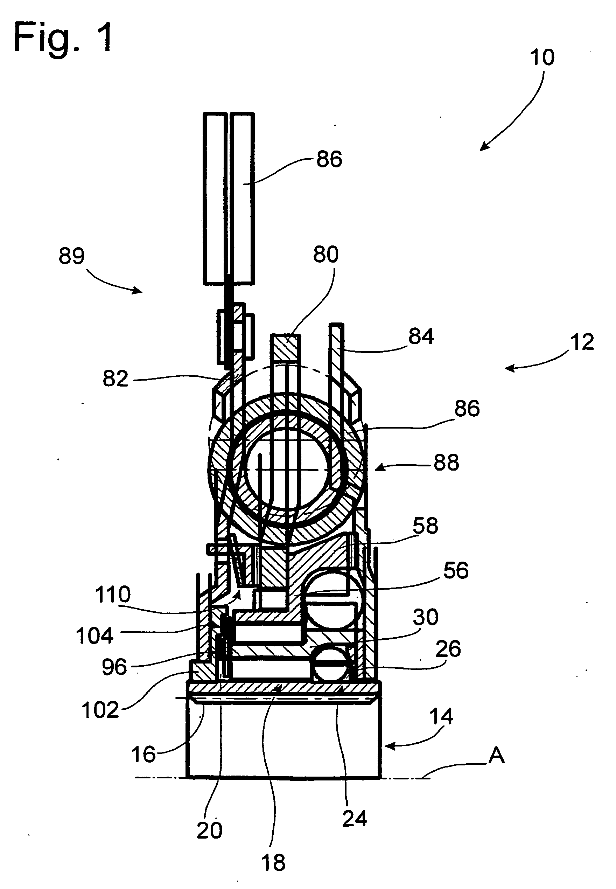

Mit Bezug auf die Fig. 1 bis 8 wird zunächst eine erste Ausgestaltungsvariante eines in einer Kupplungsscheibe 10 vorgesehenen erfindungsgemäß ausgestalteten Torsionsschwingungsdämpfers 12 beschrieben. Dieser Torsionsschwingungsdämpfer 12 ist dreistufig ausgestaltet. Wie im Folgenden dargelegt, umfasst dieser Torsionsschwingungsdämpfer 12 also eine so genannte Leerlauf-Vordämpferstufe, eine Zwischen- oder Creeping-Dämpferstufe sowie eine Haupt- bzw. Last-Dämpferstufe.

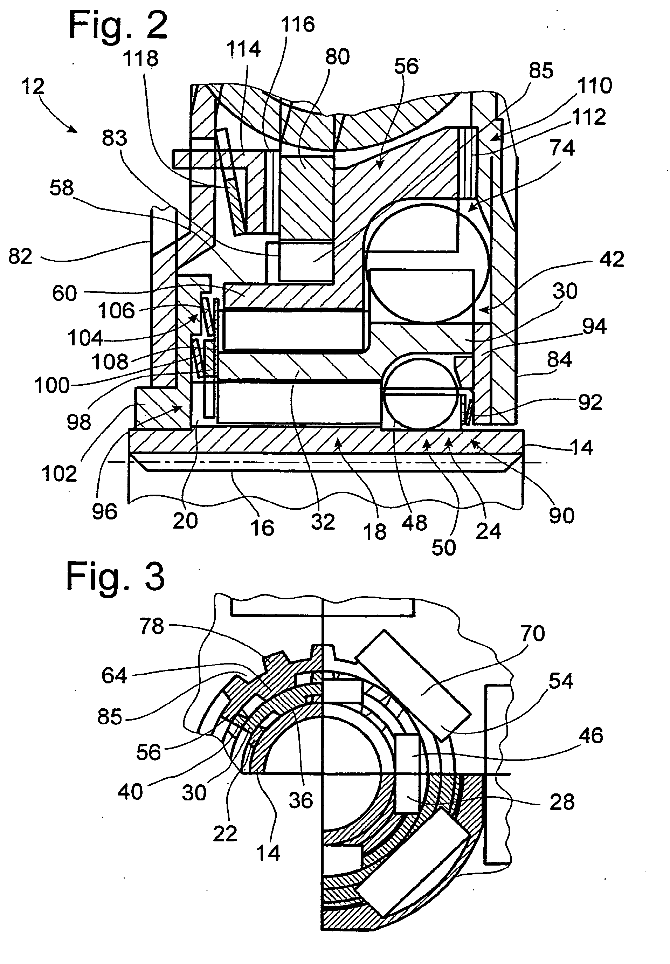

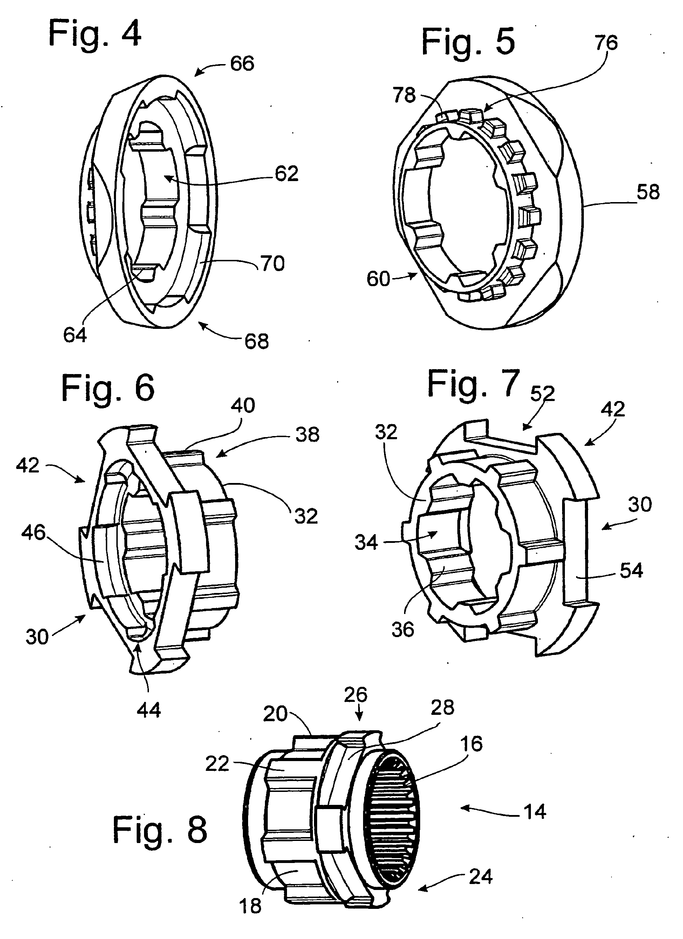

In dem der Drehachse A dieser Kupplungsscheibe 10 nahen Bereich weist der Torsionsschwingungsdämpfer 12 eine erste Nabenanordnung bzw. Nabe 14 auf. Dieses im Wesentlichen ringartig ausgestaltete Bauteil weist an seiner Innenseite eine Verzahnung 16 auf, welche eine drehfeste Ankopplung an eine Abtriebswelle, beispielsweise eine Getriebeeingangswelle, ermöglicht. Die Nabe 14, welche vor allem in den Fig. 2 und 8 auch deutlicher zu sehen ist, umfasst ferner einen Verzahnungsbereich 18 mit einer ersten Verzahnungsformation 20. Diese erste Verzahnungsformation 20 weist, wie in Fig. 8 erkennbar, mehrere über den Umfang verteilt angeordnete und nach radial außen vorspringende Zähne 22 auf, die eine vergleichsweise große axiale Erstreckung aufweisen. Axial anschließend an den Verzahnungsbereich 18 ist ein Abstützbereich 24 vorgesehen. In diesem Abstützbereich 24 weist die Nabe 14 eine erste Abstützformation 26 in Form mehrerer nach radial außen offener und näherungsweise tangential bzw. in Umfangsrichtung sich erstreckender und auch in Umfangsrichtung begrenzter Aussparungen 28 auf.

Diese erste Nabe 14 ist radial außen umgeben von einer zweiten Nabenanordnung bzw. Nabe 30. Auch diese in Fig. 2 und den Fig. 6 und 7 deutlich erkennbare Nabe 30 weist einen Verzahnungsbereich 32 auf, welcher im Wesentlichen im gleichen axialen Bereich liegt, wie der Verzahnungsbereich 18 der ersten Nabe 14. Im Verzahnungsbereich 32 weist die zweite Nabe 30 an ihrer Innenseite eine zweite Verzahnungsformation 34 mit mehreren in Umfangsrichtung aufeinander folgend angeordneten Zähnen 36 auf. An der Außenseite des Verzahnungsbereichs 32 ist eine dritte Verzahnungsformation 38 ebenfalls mit einer Mehrzahl von in Umfangsrichtung mit Abstand zueinander angeordneten Zähnen 40 vorgesehen. Wie man in Fig. 2 erkennt, sind die erst Nabe 14 und die zweite Nabe 30 so bezüglich einander positioniert, dass sie im Bereich ihrer Verzahnungsformationen 20, 34 in Kämmeingriff miteinander stehen. Dabei sind die Zähne 22 bzw. 36 so aufeinander abgestimmt, dass die beiden Naben 14, 30 in einem durch die Lage und Umfangserstreckung dieser Zähne 22, 36 definierten Freidrehwinkelbereich bezüglich einander um die Drehachse A drehbar sind, bis die jeweiligen Zähne 22, 36 bzw. Verzahnungsformationen 20, 34 eine weitere Verdrehung durch gegenseitiges Anschlagen verhindern.

Die zweite Nabe 30 weist ferner einen Abstützbereich 42 auf, welcher wiederum im Wesentlichen axial anschließend an den Verzahnungsbereich 32 derselben vorgesehen ist. In dem Abstützbereich 42 weist diese Nabe 30 eine zweite Abstützformation 44 auf, die wiederum eine Mehrzahl von in Umfangsrichtung begrenzten, nunmehr nach radial innen offenen Aussparungen 46 bereitstellt. Diese Aussparungen 46 sind in ihrer Anzahl und in ihrer Umfangserstreckung abgestimmt auf die Aussparungen 28 der ersten Abstützformation 26, so dass bei in einer Grundstellung bezüglich einander positionierten Naben 14 und 30 jeweils ein Paar von Aussparungen 28, 46 einen Aufnahmebereich für ein oder mehrere Dämpferelemente 48, beispielsweise in Form einer Schraubendruckfeder, bildet. Diese Federn sind unter Kompression in den jeweiligen Aussparungen 28, 46 eingebaut und ermöglichen somit die vorangehend bereits angesprochene Umfangsdrehbewegbarkeit zwischen den beiden Naben 14, 30, jedoch jeweils unter Kompression dieser Dämpferelemente 48. Die in allen Aussparungen 28 und 46 aufgenommenen Dämpferelemente 48 bilden in ihrer Gesamtheit eine erste Dämpferelementengruppe 50.

Aus der vorangehenden Erläuterung wird klar, dass die erste Nabe 14 zusammen mit der zweiten Nabe 30 und der ersten Dämpferelementengruppe 50 eine erste Dämpferstufe bereitstellt.

Die zweite Nabe 30 weist in ihrem Abstützbereich 42 ferner eine dritte Abstützformation 52 auf. Diese dritte Abstützformation 52 stellt, wie vor allem in Fig. 7 erkennbar, wieder eine Mehrzahl von in Umfangsrichtung aufeinander folgenden, näherungsweise tangential bzw. in Umfangsrichtung orientierten Aussparungen 54 bereit, die nunmehr wieder nach radial außen offen sind, in Umfangsrichtung jedoch begrenzt sind.

Die zweite Nabe 30 radial außen umgebend ist eine dritte Nabe 56 vorgesehen. Diese dritte Nabe bzw. dieser dritte Nabenbereich 56 umfasst ein ringartiges Nabenbauteil 58, das wiederum einen Verzahnungsbereich 60 aufweist. Der Verzahnungsbereich 60 umgibt den Verzahnungsbereich 32 der zweiten Nabe 30 radial außen und weist an seiner Innenseite eine vierte Verzahnungsformation 62 mit einer Mehrzahl von in Umfangsrichtung aufeinander folgenden Zähnen 64 auf. Diese Zähne 64 sind hinsichtlich ihrer Lage und Umfangserstreckung auf die Zähne 40 der dritten Verzahnungsformation 38 abgestimmt und stehen mit diesen derart in Kämmeingriff, dass auch zwischen der zweiten Nabe 30 und der dritten Nabenanordnung 56 bzw. dem Nabenbauteil 58 eine Relativdrehung in einem vorgegebenen Drehwinkelbereich möglich ist.

Axial anschließend an den Verzahnungsbereich 60 weist auch das Nabenbauteil 58 einen Abstützbereich 66 auf. In diesem Abstützbereich 66 ist eine vierte Abstützformation 68 mit einer Mehrzahl von nunmehr nach radial innen offenen Aussparungen 70 vorgesehen. Diese Aussparungen 70 sind auf die Aussparungen 54 der dritten Abstützformation 52 so abgestimmt, dass in einer Grunddrehlage zwischen der zweiten Nabe 30 und dem Nabenbauteil 58 jeweils ein Paar aus Aussparungen 54 und 70 eine Gesamtaussparung bereitstellt, in welcher ein oder mehrere Dämpferelemente 72 einer zweiten Dämpferelementengruppe 74 aufgenommen sind. Somit ist die Drehbewegung des Nabenbauteils 58 bezüglich der Nabe 30 in dem vorgegebenen Drehwinkelbereich unter Kompression der Dämpferelemente 72, also beispielsweise wiederum Schraubendruckfedern, der zweiten Dämpferelementengruppe 74 möglich. Ebenso wie bei der ersten Dämpferelementengruppe 50 ist durch Ausgestaltung der miteinander zusammenwirkenden Verzahnungen dafür gesorgt, dass ein auf Block Setzen der jeweiligen Dämpferelemente 48 bzw. 72 und eine damit möglicherweise einhergehende Beschädigung nicht auftreten können.

Aus der vorangehenden Beschreibung erkennt man, dass die zweite Nabe 30 zusammen mit der dritten Nabenanordnung 56 bzw. dem Nabenbauteil 58 und der zweiten Dämpferelementengruppe 74 eine zweite Dämpferstufe bereitstellt.

An der Außenseite des Verzahnungsbereichs 60 ist eine fünfte Verzahnungsformation 76 vorgesehen. Auch diese weist eine Mehrzahl von Zähnen 78 auf. Ein scheibenartig ausgestaltetes Kopplungselement 80 weist an seinem Innenumfangsbereich eine fünfte Verzahnungsformation 83 mit einer Mehrzahl von Zähnen 85 auf, die mit den Zähnen 78 der vierten Verzahnungsformation 76 derart in Kämmeingriff stehen, dass eine Relativdrehbewegung zwischen dem Nabenbauteil 58 und dem Kopplungselement 80 grundsätzlich nicht möglich ist, diese also eine sich gemeinsam bewegende bzw. drehende Baueinheit bilden.

Dieses als Zentralscheibenelement einer dritten Dämpferstufe wirksame scheibenartige Kopplungselement 80 ist an seinen beiden axialen Seiten umgeben von Deckscheibenelementen 82, 84. Diese sind an sich bekannter Weise miteinander durch nicht dargestellte Nietbolzen oder dergleichen fest verbunden. An dem Kopplungselement 80 einerseits und den Deckscheibenelementen 82, 84 andererseits sind jeweilige Federfenster bzw. Abstützbereiche gebildet, an welchen die Dämpferelemente 86 einer dritten Dämpferelementengruppe 88 in Umfangsrichtung abgestützt sind. Die Deckscheibenelemente 82, 84 bilden zusammen mit den am Deckscheibenelement 82 getragenen Reibbelägen 86 der Kupplungsscheibe 10 eine allgemein mit 89 bezeichnete Drehmomentübertragungsbaugruppe, über welche im eingekuppelten Zustand und im Zugbetrieb das von einer Antriebsmaschine gelieferte Drehmoment in die Kupplungsscheibe 10 eingeleitet wird.

Durch die vorangehend beschriebene Staffelung der drei Naben bzw. Nabenbereiche 14, 30, 56 derart, dass ihre Verzahnungsbereiche 18, 32 und 60 radial übereinander liegen und auch ihre Abstützbereiche 24, 42, 66 axial anschließend an die jeweiligen Verzahnungsbereiche radial gestaffelt liegen, wird eine sehr kompakte Bauweise geschaffen, die es ermöglicht, drei Dämpferstufen, also drei Dämpferelementengruppen 50, 74, 88 für verschiedene Drehmomentbereiche vorzusehen. Die radial innerste Dämpferelementengruppe 50 dient als Vordämpfer bzw. Leerlaufdämpfer und weist somit die am leichtesten zu komprimierenden Dämpferelemente bzw. Federn 48 auf. Im Wirkungsbereich dieser Dämpferelementengruppe 50 werden die dann vorhandenen Kräfte bzw. Drehmomente noch nicht ausreichen, um auch die Dämpferelemente 72 der zweiten Dämpferelementengruppe 74 und die Dämpferelemente 86 der dritten Dämpferelementengruppe 88 zu komprimieren. Erst dann, wenn beispielsweise durch Anschlagen der beiden Verzahnungsformationen 20, 34 aneinander die erste Dämpferelementengruppe 50 überbrückt ist, wird der Wirkungsbereich der zweiten Dämpferelementengruppe 74 erreicht. Dies kann durch geeignete Abstimmung der Dämpferelemente 48 bzw. 72 und entsprechend vorgespannten Einbau erreicht werden. Selbstverständlich kann die Abstimmung auch derart sein, dass bereits vor Erreichen des Endes des Wirkungsbereichs der ersten Dämpferelementengruppe 50 eine geringfügige Kompression in der zweiten Dämpferelementengruppe 74 auftritt, so dass ein kontinuierlicher Übergang bzw. eine kontinuierliche Übergabe der Wirkung der ersten Dämpferelementengruppe 50 auf die zweite Dämpferelementengruppe 74 stattfindet. Selbiges gilt dann, wenn die zweite Dämpferelementngruppe 74 sich bei weiter ansteigendem Drehmoment dem Ende ihres Wirkungsbereichs annähert. Auch hier kann vorgesehen sein, dass noch vor dem gegenseitigen Anschlagen der Verzahnungsformationen 38 und 62 aneinander bereits eine gewisse Kompression im Bereich der dritten Dämpferelementengruppe 88 auftritt, so dass auch hier eine kontinuierliche Übergabe der Dämpfungswirkung erlangt wird. Selbstverständlich ist es auch möglich, durch entsprechend vorgespannten Einbau der jeweiligen Dämpferelemente und durch entsprechende Auswahl der Federkonstanten dieser Dämpferelemente dafür zu sorgen, dass eine nachfolgend wirksame Dämpferelementengruppe erst dann komprimiert werden kann, wenn eine zuvor wirksame Dämpferelementengruppe bereits vollständig ausgelastet, also vollständig komprimiert ist.

Durch den vorangehend beschriebenen Aufbau insbesondere der verschiedenen Naben bzw. Nabenanordnungen 14, 30, 56 mit den vergleichsweise langgestreckten Verzahnungsbereichen 18, 32, 60 wird es möglich, bei die gewünschte Relativverdrehbarkeit und somit die gewünschten Dämpfungswinkel zulassender Anzahl der wirksamen Zähne auch große Drehmomente zu übertragen. Die erste Nabe 14 und die zweite Nabe 30 bzw. das Nabenbauteil 58 der dritten Nabe bzw. Nabenanordnung 56 können beispielsweise kaltfließpresstechnisch oder in einem Sintervorgang hergestellt werden. Dies ermöglicht auch die Herstellung mit vergleichsweise komplexen Formgebungen. Wie im Folgenden anhand anderer Ausgestaltungsformen noch dargelegt, kann es aber auch vorteilhaft sein, bei den verschiedenen Naben bzw. Nabenanordnungen den Verzahnungsbereich einerseits und den Abstützbereich andererseits nicht integral, wie vorangehend beschrieben, sondern an getrennten, drehfest miteinander gekoppelten Bauteilen vorzusehen.

In Zuordnung zu den verschiedenen vorangehend beschriebenen Dämpferstufen, bei welchen Drehmomentschwankungen durch Kompression von Dämpferelementen aufgefangen werden können, sind weiterhin für eine Energieabfuhr sorgende Reibeinrichtungen vorgesehen. So wirkt zwischen der ersten Nabe 14 und der zweiten Nabe 30 eine allgemein mit 90 bezeichnete Reibeinrichtung, welche im Wesentlichen einen Federring 92 aufweist. Dieser stützt sich über einen Abstützring 120 axial an der Nabe 14, nämlich dem Abstützbereich 24 derselben, ab und stützt sich bezüglich der zweiten Nabe 30 an einem später beschriebenen Reibring 94 ab. Dieser ist so geformt, dass er durch Eingreifen in die Aussparungen 46 der zweiten Abstützformation 44 mit der zweiten Nabe 30 drehfest gekoppelt ist. Die Reibeinrichtung 90 stellt eine permanent wirkende Reibung bereit, die immer dann auftritt, wenn die beiden Naben 14, 30 sich bezüglich einander verdrehen. Eine weitere verschleppt wirkende Reibeinrichtung 96 wirkt ebenfalls zwischen der ersten Nabe 14 und der zweiten Nabe 30. Diese Reibeinrichtung 96 umfasst einen Reibring 98, der mit einer Verzahnung in die erste Verzahnungsformation 20 der Nabe 14 mit Drehbewegungsspiel eingreift unter der Vorspannung einer Ringfeder 100 über eine Zwischenscheibe gegen die zweite Nabe 30 gepresst ist. Diese Ringfeder 100 stützt sich an einem Lagerteil 102 ab, das beispielsweise mit dem Deckscheibenelement 82 drehfest gekoppelt ist und am Außenumfang der Nabe 14 radial gelagert und an der Verzahnungsformation 20 der Nabe 14 axial abgestützt ist. Durch die Wirkung der über den Reibring 94 das Deckscheibenelement 84 bezüglich der Nabe 14 beaufschlagenden Ringfeder 92 ist gleichzeitig auch eine axial feste Anlage des Lagerrings 102 an der ersten Verzahnungsformation 20 und somit auch eine definierte axiale Lage der Drehmomentübertragungsbaugruppe 89 bezüglich der Nabe 14 vorgegeben.

Die Reibeinrichtung 96 wird immer dann wirksam, wenn die Relativdrehung zwischen den beiden Naben 14 und 30 den durch Eingreifen des Reibrings 98 in die erste Verzahnungsformation 20 definierten Freiwinkel überschreitet. Dann wird die weitere Drehung der Naben 14 und 30 bezüglich einander unter kombinierter Wirkung der Reibeinrichtungen 90 und 96 bezüglich einander ablaufen.

Zwischen der zweiten Nabe 30 und der dritten Nabenanordnung 56 wirkt eine weitere Reibeinrichtung 104. Diese umfasst im Wesentlichen eine Ringfeder 106, die einerseits am Lagerbauteil 102 abgestützt ist und andererseits über die bereits angesprochene Zwischenplatte 108 an der zweiten Nabe 30 axial abgestützt ist. Im Wirkungsbereich der zweiten Dämpferstufe, also bei Relativdrehung zwischen der Nabe 30 und dem Nabenbauteil 58, wird sich das Lagerbauteil 102 zusammen mit dem Deckscheibenelement 82 und dem Nabenbauteil 56 bezüglich der Nabe 30 drehen, so dass im Abstützbereich der Ringfeder 106 eine Reibung entstehen wird. Gleichzeitig wird der mit der Nabe 30 drehfeste Reibring 94 sich bezüglich des Deckscheibenelements 84 verdrehen, so dass auch dort eine Reibwirkung erzeugt wird. Man erkennt also, dass die Reibeinrichtung 104, welche zwischen der Nabe 30 und der Nabenanordnung 56, also im Wirkungsbereich der zweiten Dämpferstufe, wirksam ist, eine permanent wirkende Reibung erzeugt, immer dann, wenn die beiden Naben 30, 56 sich bezüglich einander verdrehen.

Eine weitere Reibeinrichtung 110 ist im Wirkungsbereich der dritten Dämpferstufe, also der dritten Dämpferelementengruppe 80 aktiv. Diese Reibeinrichtung 110 umfasst einen Reibring 112, über welchen das Nabenbauteil 56 axial am Deckscheibenelement 84 abgestützt ist. Ein winkelartig ausgestalteter Druckring 114 beaufschlagt das Kopplungselement 80 und somit ebenfalls die dritte Nabenanordnung 56 über einen weiteren Reibring oder Reibbelag 116, wobei diese Beaufschlagungswirkung erzeugt wird durch eine Ringfeder 118. Diese stützt sich am Deckscheibenelement 82 einerseits und am Druckring 114 andererseits ab. Der Druckring 114 greift mit axialen Vorsprüngen in entsprechende Aussparungen des Deckscheibenelements 82 ein, so dass er mit diesem drehfest verbunden ist. Auch die Reibeinrichtung 110 ist also permanent dann wirksam, wenn durch Kompression der Dämpferelemente 86 der dritten Dämpferelementengruppe 88 die dritte Dämpferstufe wirksam ist. Hier könnte beispielsweise auch vorgesehen sein, den Druckring 114 mit Drehbewegungsspiel bezüglich des Deckscheibenelements 82 auszugestalten, so dass auch hier neben dem im Bereich des Reibrings 112 erzeugten permanent wirkenden Reibbeitrag auch ein verschleppt wirkender Reibbeitrag vorhanden sein kann.

Aus der vorangehenden Erläuterung erkennt man, dass bei dem erfindungsgemäßen Torsionsschwingungsdämpfer 12 also vorteilhafterweise zu den verschiedenen Dämpferstufen bzw. in Parallelwirkung zu den verschiedenen Dämpferelementengruppen 50, 74, 88 Reibeinrichtungen vorgesehen sein können, wobei diese Reibeinrichtungen beliebig, je nach Anforderung permanent wirken können, verschleppt wirken können oder einen Permanentbeitrag und einen verschleppt wirkenden Reibbeitrag liefern können. Hierbei ist bei den verschleppt wirkenden Reibbeiträgen zu berücksichtigen, dass der dort jeweils bereitgestellte Freiwinkel selbstverständlich kleiner sein muss, als der jeweilige Wirkwinkel der betroffenen Dämpferstufe. Auch ist es möglich, die verschiedenen Reibeinrichtungen mit progressiver Kennlinie bereitzustellen.

Nachfolgend werden verschiedene Variationsmöglichkeiten des erfindungsgemäßen Torsionsschwingungsdämpfers 12 beschrieben.

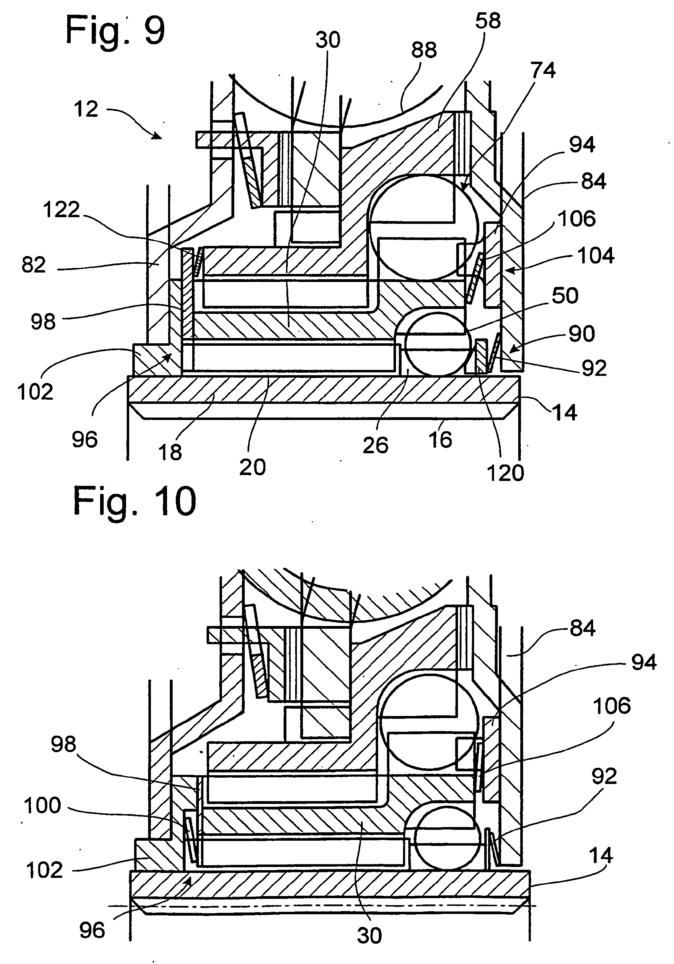

Man erkennt zunächst in Fig. 9 bei der Reibeinrichtung 92 den Zwischenring 120, der nunmehr über eine entsprechende Verzahnung in Eingriff mit der ersten Abstützformation 26 steht. Die Reibeinrichtung 104, welche für eine Reibung zwischen der ersten und zweiten Dämpferstufe sorgt, umfasst auch hier den Reibring 94, der zwar mit der Nabe 30 drehfest gehalten ist, nunmehr jedoch durch die Ringfeder 106 gegen das Deckscheibenelement 84 gepresst ist. Durch diese Kraftbeaufschlagung wird gleichzeitig die Nabe 30 gegen den Reibring 98 gepresst, so dass auch auf diese Art und Weise die Vorspannkraft für die zwischen der Nabe 30 und der Nabe 14 wirksame verschleppt wirkende Reibeinrichtung 96 bereitgestellt wird. Weiterhin ist eine Ringfeder 122 vorgesehen, welche zwischen dem Nabenbauteil 58 und dem Reibring 98 wirkt, wodurch ein zusätzlicher Reibkraftbeitrag für die zwischen den Naben 14 und 30 wirksame Reibeinrichtung 96 erzeugt wird, da in diesem Zustand auch das Nabenbauteil 58 sich zusammen mit der Nabe 30 bezüglich der Nabe 14 verdrehen wird. Die Reibung des Reibrings 98 wird hier primär bezüglich des Lagerbauteils 102 erzeugt werden, da der Reibring 98 durch die Ringfeder 106 und die Nabe 30 gegen dieses Lagerbauteil 102 gepresst wird.

Bei der Ausgestaltungsform gemäß Fig. 10 presst die sich am Reibring 94 abstützende Ringfeder 106 über die Nabe 30 den Reibring 98 wiederum gegen das Lagerbauteil 102, so dass im Wirkbereich der Reibeinrichtung 96 eine Reibung einerseits zwischen diesem Reibring 98 und der Nabe 30 und andererseits zwischen dem Reibring 98 und dem Lagerbauteil 102 erzeugt wird, das in diesem Zustand sich zusammen mit der Nabe 30 drehen wird.

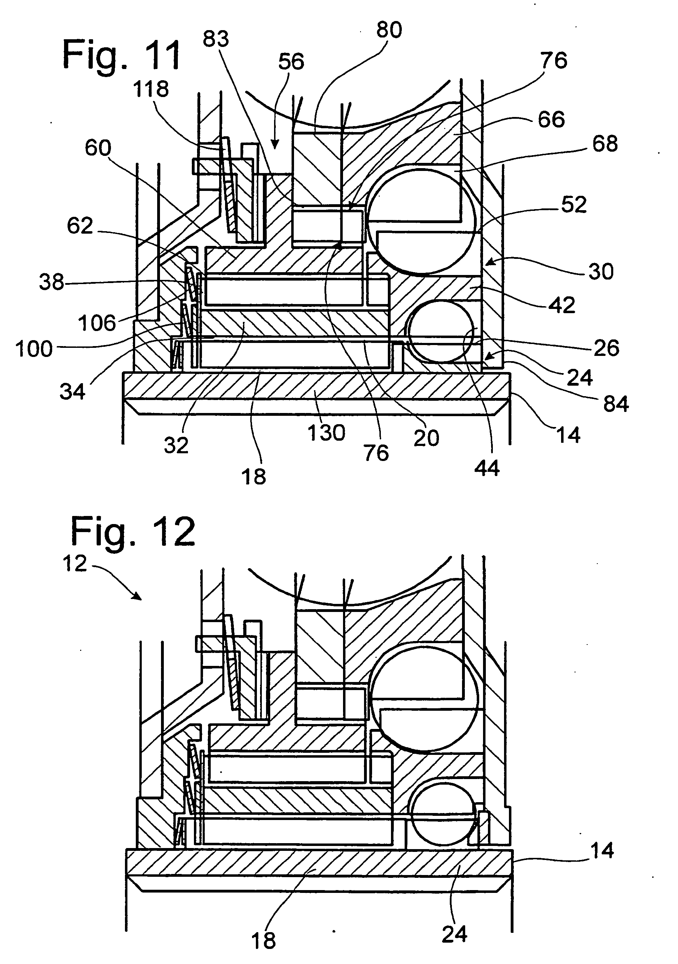

In Fig. 11 ist eine Ausgestaltungsvariante gezeigt, bei welcher bei den verschiedenen Naben bzw. Nabenanordnungen 14, 30, 56 die jeweiligen Verzahnungsbereiche und Abstützbereiche an voneinander getrennt ausgestalteten Bauteilen vorgesehen sind.

Man erkennt zunächst, dass bei der Nabe 14 das ringartige Bauteil 130 im Wesentlichen nur den Verzahnungsbereich 18 mit der ersten Verzahnungsformation 20 aufweist. Der Abstützbereich 24 mit der ersten Abstützformation 26 ist an einem separaten ringartigen Bauteil ausgestaltet, das auf das Bauteil 130 aufgeschoben ist und mit einer axial gerichteten Verzahnung in die erste Verzahnungsgformation 20 eingreift. Auf diese Art und Weise wird eine drehfeste Kopplung des Abstützbereichs 24 mit dem Verzahnungsbereich 18 erzeugt.

Auch bei der Nabe bzw. Nabenanordnung 30 ist nunmehr der Verzahnungsbereich 32 mit seinen beiden Verzahnungsformationen 34, 38 getrennt ausgestaltet von dem Abstützbereich 42 mit seinen beiden Abstützformationen 44, 52. Auch hier weist der Abstützbereich 42 Vorsprünge bzw. eine Verzahnungsformation auf, die in Kämmeingriff mit der radial äußeren Verzahnungsformation 38 steht und somit eine drehfeste Kopplung zwischen dem Verzahnungsbereich 32 und dem Abstützbereich 42 vorsieht.

Bei der Nabenanordnung 56 ist ebenfalls der Verzahnungsbereich 60 mit seinen beiden Verzahnungsformationen 62 und 76 getrennt ausgestaltet vom Abstützbereich 66 mit seiner Abstützformation 68. Der Abstützbereich 66 weist auch hier eine Verzahnungsformation auf, die zusammen mit der fünften Verzahnungsformation 83 des Kopplungselements 80 im Kämmeingriff gebracht ist mit der vierten Verzahnungsformation 76 des Verzahnungsbereichs 60.

Durch die verschiedenen Ringfedern 100, 106, 118 ist dafür gesorgt, dass durch axiales Beaufschlagen der verschiedenen Verzahnungsbereiche 18, 32, 60 diese in festem Kämmeingriff mit den zugeordneten Abstützbereichen 24, 42, 66 gehalten werden, die nunmehr axial gegen das Deckscheibenelement 84 gepresst werden.

Durch Ausgestalten der Nabenanordnungen aus mehreren die Verzahnungsbereiche einerseits und die Abstützbereiche andererseits bereitstellenden und miteinander zu koppelnden Bauteilen können diese aus jeweils optimierten Baustoffen und mit jeweils optimierter Form bereitgestellt werden. So kann beispielsweise aus Stabilitätsgründen bei den Verzahnungsbereichen vorgesehen sein, dass diese aus einem Metall gebildet sind, während die Abstützbereiche aus Kunststoffmaterial aufgebaut sind. Selbstverständlich können insbesondere die aus Metall bereitzustellenden Bauteile auch in Sinter- bzw. Kaltfließpressbauweise bereitgestellt sein.

Die in Fig. 12 gezeigte Ausgestaltungsform entspricht im Wesentlichen der in Fig. 11 gezeigten, ein Unterschied besteht insofern, als hier bei der ersten Nabe 14 der Verzahnungsbereich 18 und der Abstützbereich 24 wieder ein integrales Bauteil bilden. Daraus wird erkennbar, dass die Ausgestaltung bei den einzelnen Naben bzw. Nabenanordnungen jeweils unabhängig von der Ausgestaltung bei anderen Nabenanordnungen ist.

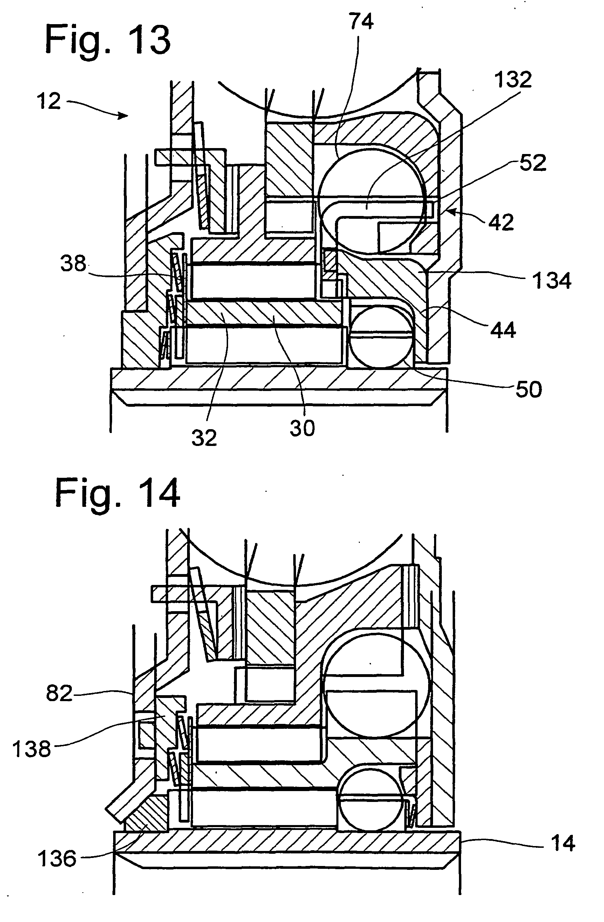

Bei der in Fig. 13 gezeigten Ausgestaltungsvariante umfasst der Abstützbereich 42 der zweiten Nabe bzw. Nabenanordnung 30 zwei Bauteile. Dies ist zum einen ein winkelartig ausgestaltetes und vorzugsweise aus Metall ausgebildetes Bauteil 132, das eine Verzahnung aufweist und mit der dritten Verzahnungsformation 38 der Nabenanordnung 30 in im Wesentlichen spielfreiem Kämmeingriff steht. Dieses Bauteil 132 stellt im Wesentlichen die dritte Abstützformation 52 bereit. Ein weiteres Bauteil 134, das entweder direkt oder über das Bauteil 132 drehfest an den Verzahnungsbereich 32 der Nabenanordnung 30 angekoppelt ist, stellt die zweite Abstützformation 44 bereit. Somit kann bei der zweiten Nabenanordnung 30 dafür gesorgt werden, dass in Zuordnung zu der größere Drehmomente übertragenden Dämpferelementengruppe 74 eine höhere Stabilität vorgesehen ist, als in Zuordnung zu der bei geringeren Drehmomenten wirksamen Dämpferelementengruppe 50.

In Fig. 14 ist eine im Wesentlichen der Ausgestaltungsform gemäß Fig. 1 entsprechende Variante gezeigt, bei welcher jedoch das Deckscheibenelement 82 radial innen angeschrägt ist und mit einem entsprechend angeschrägten bzw. konisch geformten Lagerring 36 zusammenwirkt. Auf diese Art und Weise wird eine verbesserte Zentrierwirkung der Drehmomentübertragungsbaugruppe 88 bezüglich der ersten Nabe 14 erzeugt. Dabei ist weiterhin ein Abstützring 138 vorgesehen, über welchen die verschiedenen Ringfedern der verschiedenen Reibeinrichtungen nunmehr axial am Deckscheibenelement 82 abgestützt sind.

Durch das Einführen der vorangehend angesprochenen Zentrierwirkung wird es möglich, Achsversätze und Lagerversätze besser zu kompensieren und somit das Auftreten von Taumelbewegungen zu vermeiden.

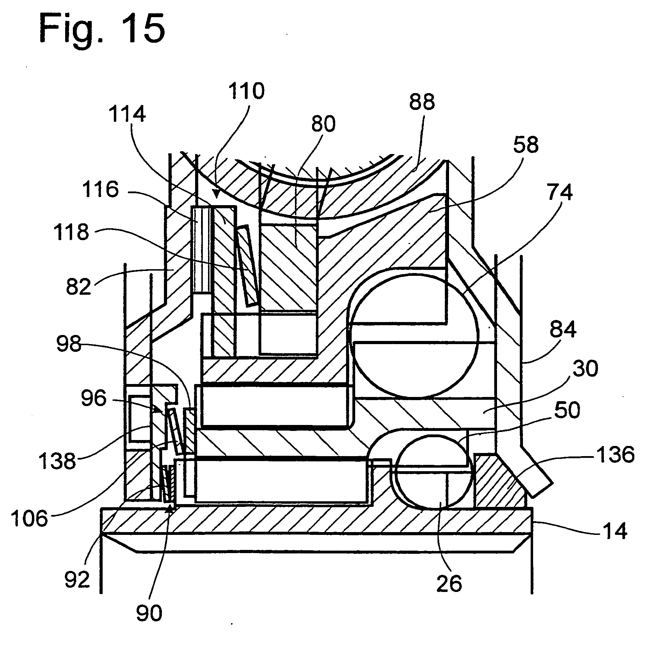

Bei der in Fig. 15 gezeigten Ausgestaltungsform ist der eine Zentrierwirkung bereitstellende Lagerring 136 nunmehr an der anderen axialen Seite und in Zuordnung zu dem radial innen angeschrägten Deckscheibenelement 84 vorgesehen. Der Lagerring 136 stützt sich nunmehr also axial an der Abstützformation 26 der Nabe 14 ab, und zwar unter der Beaufschlagungswirkung der ebenfalls an der anderen axialen Seite vorgesehenen Ringfeder 92 der Reibeinrichtung 90. Somit erzeugt auch hier diese Reibeinrichtung 90 eine Grundreibung für die erste Dämpferstufe.

Durch die Ringfeder 106 der Reibeinrichtung 96 wird der Reibring 98 axial gegen die Nabe 30 gepresst, wodurch diese an der anderen axialen Seite gegen das Deckscheibenelement 84 gepresst wird. Auf diese Art und Weise wird einerseits der verschleppt wirkende Reibbeitrag bereitgestellt, wenn die Nabe 30 sich bezüglich der Nabe 14 dreht, also die erste Dämpferelementengruppe wirksam ist. Andererseits wird ein Reibbeitrag bereitgestellt, wenn im Wirkbereich der zweiten Dämpferelementengruppe 74 und im Wirkbereich der dritten Dämpferelementengruppe 88 sich die Nabe 30 bezüglich des Deckscheibenelements 84 und auch bezüglich des Deckscheibenelements 82 verdreht.

Die im Wirkbereich der dritten Dämpferstufe eine Reibkraft erzeugende Reibeinrichtung 110 umfasst wieder eine Ringfeder 118, die nunmehr aber am Kopplungselement 80 abgestützt ist und den scheibenartig ausgestalteten Druckring 114 unter Zwischenlagerung eines Reibrings oder Reibbelags 116 gegen das Deckscheibenelement 82 presst. An der anderen axialen Seite wird dabei das Nabenbauteil 58 gegen das Deckscheibenelement 84 gepresst.

Es sei darauf hingewiesen, dass selbstverständlich auch bei dieser Ausgestaltungsform die verschiedenen Naben bzw. Nabenanordnungen mehrteilig ausgestaltet sein können.

## Patentansprüche

1. Torsionsschwingungsdämpfer, insbesondere für eine Kupplungsscheibe, umfassend:
- eine erste Nabenanordnung (14) mit einer ersten Verzahnungsformation (20),
- eine zweite Nabenanordnung (30) mit einer zweiten Verzahnungsformation (34), die mit der ersten Verzahnungsformation (20) der ersten Nabenanordnung (14) in Kämmeingriff steht, wobei die erste Verzahnungsformation (20) und die zweite Verzahnungsformation (34) eine Relativverdrehbarkeit zwischen der ersten Nabenanordnung (14) und der zweiten Nabenanordnung (30) um eine Drehachse (A) in einem ersten Drehwinkelbereich gegen die Rückstellwirkung einer ersten Dämpferelementengruppe (50) zulassen, und mit einer dritten Verzahnungsformation (38),
- eine dritte Nabenanordnung (56) mit einer vierten Verzahnungsformation (62), die mit der dritten Verzahnungsformation (38) der zweiten Nabenanordnung (30) in Kämmeingriff steht, wobei die dritte Verzahnungsformation (38) und die vierte Verzahnungsformation (62) eine Relativverdrehbarkeit zwischen der zweiten Nabenanordnung (30) und der dritten Nabenanordnung (56) um die Drehachse (A) in einem zweiten Drehwinkelbereich gegen die Rückstellwirkung einer zweiten Dämpferelementengruppe (74) zulassen, wobei die dritte Nabenanordnung (56) ferner mit einer dritten Dämpferelementengruppe (88) zusammenwirkt, so dass die dritte Nabenanordnung (56) gegen die Rückstellwirkung der dritten Dämpferelementengruppe (88) bezüglich einer Drehmomentübertragungsbaugruppe (89) um die Drehachse (A) drehbar ist.
**dadurch gekennzeichnet, dass** die erste Nabenanordnung (14) eine erste Abstützformation (26) für die erste Dämpferelementengruppe (50) aufweist und die zweite Nabenanordnung (30) eine zweite Abstützformation (44) für die erste Dämpferelementengruppe (50) aufweist, wobei die erste Abstützformation (26) axial folgend auf die erste Verzahnungsformation (20) angeordnet ist oder/und die zweite Abstützformation (44) axial folgend auf die zweite Verzahnungsformation (34) angeordnet ist.

2. Torsionsschwingungsdämpfer, insbesondere für eine Kupplungsscheibe, umfassend:
- eine erste Nabenanordnung (14) mit einer ersten Verzahnungsformation (20),
- eine zweite Nabenanordnung (30) mit einer zweiten Verzahnungsformation (34), die mit der ersten Verzahnungsformation (20) der ersten Nabenanordnung (14) in Kämmeingriff steht, wobei die erste Verzahnungsformation (20) und die zweite Verzahnungsformation (34) eine Relativverdrehbarkeit zwischen der ersten Nabenanordnung (14) und der zweiten Nabenanordnung (30) um eine Drehachse (A) in einem ersten Drehwinkelbereich gegen die Rückstellwirkung einer ersten Dämpferelementengruppe (50) zulassen, und mit einer dritten Verzahnungsformation (38),
- eine dritte Nabenanordnung (56) mit einer vierten Verzahnungsformation (62), die mit der dritten Verzahnungsformation (38) der zweiten Nabenanordnung (30) in Kämmeingriff steht, wobei die dritte Verzahnungsformation (38) und die vierte Verzahnungsformation (62) eine Relativverdrehbarkeit zwischen der zweiten Nabenanordnung (30) und der dritten Nabenanordnung (56) um die Drehachse (A) in einem zweiten Drehwinkelbereich gegen die Rückstellwirkung einer zweiten Dämpferelementengruppe (74) zulassen, wobei die dritte Nabenanordnung (56) ferner mit einer dritten Dämpferelementengruppe (88) zusammenwirkt, so dass die dritte Nabenanordnung (56) gegen die Rückstellwirkung der dritten Dämpferelementengruppe (88) bezüglich einer Drehmomentübertragungsbaugruppe (89) um die Drehachse (A) drehbar ist.
**dadurch gekennzeichnet, dass** die zweite Nabenanordnung (30) eine dritte Abstützformation (52) für die zweite Dämpferelementengruppe (74) aufweist und die dritte Nabenanordnung (56) eine vierte Abstützformation (68) für die zweite Dämpferelementengruppe (74) aufweist, wobei die dritte Abstützformation (52) axial folgend auf die dritte Verzahnungsformation (38) angeordnet ist oder/und die vierte Abstützformation (68) axial folgend auf die vierte Verzahnungsformation (62) angeordnet ist.

3. Torsionsschwingungsdämpfer nach einem der Ansprüche 1 oder 2,
**dadurch gekennzeichnet, dass** die zweite Nabenanordnung (30) mit einem die zweite Verzahnungsformation (34) aufweisenden Verzahnungsbereich (32) die erste Nabenanordnung (14) in ihrem die erste Verzahnungsformation (20) aufweisenden Verzahnungsbereich (18) radial außen umgibt.

4. Torsionsschwingungsdämpfer nach einem der Ansprüche 1 bis 3
**dadurch gekennzeichnet, dass** die dritte Nabenanordnung (56) mit ihrem die vierte Verzahnungsformation (62) aufweisenden Verzahnungsbereich (60) die zweite Nabenanordnung (30) in ihrem die dritte Verzahnungsformation (38) aufweisenden Verzahnungsbereich (32) radial außen umgibt.

5. Torsionsschwingungsdämpfer nach einem der Ansprüche 1 bis 4,
**dadurch gekennzeichnet, dass** die zweite Nabenanordnung (30) einen Verzahnungsbereich (32) aufweist, der an einer radialen Innenseite die zweite Verzahnungsformation (34) aufweist und an einer radialen Außenseite die dritte Verzahnungsformation (38) aufweist.

6. Torsionsschwingungsdämpfer nach einem der Ansprüche 1 bis 5,
**dadurch gekennzeichnet, dass** die dritte Nabenanordnung (56) in einem Verzahnungsbereich (60) eine fünfte Verzahnungsformation (76) aufweist und dass ein mit der dritten Dämpferelementengruppe (88) zusammenwirkendes Kopplungselement (80) der dritten Nabenanordnung (56) eine sechste Verzahnungsformation (83) aufweist, die mit der fünften Verzahnungsformation (76) im Wesentlichen ohne Drehbewegungsspiel in Kämmeingriff steht.

7. Torsionsschwingungsdämpfer nach Anspruch 2,
**dadurch gekennzeichnet, dass** die erste Nabenanordnung (14) eine erste Abstützformation (26) für die erste Dämpferelementengruppe (50) aufweist und die zweite Nabenanordnung (30) eine zweite Abstützformation (44) für die erste Dämpferelementengruppe (50) aufweist, wobei die erste Abstützformation (26) axial folgend auf die erste Verzahnungsformation (20) angeordnet ist oder/und die zweite Abstützformation (44) axial folgend auf die zweite Verzahnungsformation (34) angeordnet ist.

8. Torsionsschwingungsdämpfer nach Anspruch 1 oder 7,
**dadurch gekennzeichnet, dass** die zweite Abstützformation (44) die erste Abstützformation (26) radial außen umgibt.

9. Torsionsschwingungsdämpfer nach Anspruch 1 oder einem der Ansprüche 7 und 8,
**dadurch gekennzeichnet, dass** die erste Nabenanordnung (14) einen Verzahnungsbereich (18) und einen Abstützbereich (24) aufweist, welche integral miteinander verbunden sind.

10. Torsionsschwingungsdämpfer nach Anspruch 7 oder 8,
**dadurch gekennzeichnet, dass** die erste Nabenanordnung (14) einen Verzahnungsbereich (18) und einen Abstützbereich (24) aufweist, welche an voneinander getrennt ausgestalteten Bauteilen vorgesehen sind.

11. Torsionsschwingungsdämpfer nach einem der Ansprüche 7 bis 10,
**dadurch gekennzeichnet, dass** die zweite Nabenanordnung (30) einen die zweite Verzahnungsformation (34) und die dritte Verzahnungsformation (38) aufweisenden Verzahnungsbereich (32) aufweist und einen wenigstens die zweite Abstützformation (44) aufweisenden Abstützbereich (42) aufweist, welche integral miteinander verbunden sind.

12. Torsionsschwingungsdämpfer nach einem der Ansprüche 7 bis 10,
**dadurch gekennzeichnet, dass** die zweite Nabenanordnung (30) einen die zweite Verzahnungsformation (34) und die dritte Verzahnungsformation (38) aufweisenden Verzahnungsbereich (32) aufweist und einen wenigstens die zweite Abstützformation (44) aufweisenden Abstützbereich (42) aufweist, welche an voneinander getrennt ausgestalteten Bauteilen vorgesehen sind.

13. Torsionsschwingungsdämpfer nach Anspruch 1,
**dadurch gekennzeichnet, dass** die zweite Nabenanordnung (30) eine dritte Abstützformation (52) für die zweite Dämpferelementengruppe (74) aufweist und die dritte Nabenanordnung (56) eine vierte Abstützformation (68) für die zweite Dämpferelementengruppe (74) aufweist, wobei die dritte Abstützformation (52) axial folgend auf die dritte Verzahnungsformation (38) angeordnet ist oder/und die vierte Abstützformation (68) axial folgend auf die vierte Verzahnungsformation (62) angeordnet ist.

14. Torsionsschwingungsdämpfer nach Anspruch 2 oder 13,
**dadurch gekennzeichnet, dass** die vierte Abstützformation (68) die dritte Abstützformation (52) radial außen umgibt.

15. Torsionsschwingungsdämpfer nach Anspruch 2 oder einem der Ansprüche 13 oder 14,
**dadurch gekennzeichnet, dass** die zweite Nabenanordnung (30) einen die zweite Verzahnungsformation (34) und die dritte Verzahnungsformation (38) aufweisenden Verzahnungsbereich (32) aufweist und einen wenigstens die dritte Abstützformation (52) aufweisenden Abstützbereich (42) aufweist, welche integral miteinander verbunden sind.

16. Torsionsschwingungsdämpfer nach Anspruch 2 oder einem der Ansprüche 13 oder 14,
**dadurch gekennzeichnet, dass** die zweite Nabenanordnung (30) einen die zweite Verzahnungsformation (34) und die dritte Verzahnungsformation (38) aufweisenden Verzahnungsbereich (32) aufweist und einen wenigstens die dritte Abstützformation (52) aufweisenden Abstützbereich (42) aufweist, welche an voneinander getrennt ausgebildeten Bauteilen vorgesehen sind.

17. Torsionsschwingungsdämpfer nach Anspruch 2 oder einem der Ansprüche 13 bis 16,
**dadurch gekennzeichnet, dass** die dritte Nabenanordnung (56) einen wenigstens die vierte Verzahnungsformation (62) aufweisenden Verzahnungsbereich (60) und einen die vierte Abstützformation (68) aufweisenden Abstützbereich (66) aufweist, welche integral miteinander verbunden sind.

18. Torsionsschwingungsdämpfer nach Anspruch 2 oder einem der Ansprüche 13 bis 16,
**dadurch gekennzeichnet, dass** die dritte Nabenanordnung (56) einen wenigstens die vierte Verzahnungsformation (62) aufweisenden Verzahnungsbereich (60) und einen die vierte Abstützformation (68) aufweisenden Abstützbereich (66) aufweist, welche an voneinander getrennt ausgebildeten Bauteilen vorgesehen sind.

19. Torsionsschwingungsdämpfer nach einem der Ansprüche 1 bis 18,
**dadurch gekennzeichnet, dass** zwischen der ersten Nabenanordnung (14) und der zweiten Nabenanordnung (30) oder/und zwischen der zweiten Nabenanordnung (30) und der dritten Nabenanordnung (56) oder/und zwischen der dritten Nabenanordnung (56) und der Drehmomentübertragungsbaugruppe (89) eine permanent wirksame Reibeinrichtung (90, 104, 110) wirkt.

20. Torsionsschwingungsdämpfer nach einem der Ansprüche 1 bis 19,
**dadurch gekennzeichnet, dass** zwischen der ersten Nabenanordnung (14) und der zweiten Nabenanordnung (30) oder/und zwischen der zweiten Nabenanordnung (30) und der dritten Nabenanordnung (56) oder/und zwischen der dritten Nabenanordnung (56) und der Drehmomentübertragungsbaugruppe (89) eine verschleppt wirksame Reibeinrichtung (96) wirkt.

21. Kupplungsscheibe, umfassend einen Torsionsschwingungsdämpfer (12) nach einem der vorangehenden Ansprüche,
wobei die Drehmomentübertragungsbaugruppe (89) Reibbeläge (86) trägt und die erste Nabenanordnung (14) zur drehfesten Ankopplung an eine Abtriebswelle ausgebildet ist.

## Claims

1. Torsional vibration damper, in particular for a clutch plate, comprising:
- a first hub arrangement (14) having a first toothing formation (20),
- a second hub arrangement (30) having a second toothing formation (34) which is in meshing engagement with the first toothing formation (20) of the first hub arrangement (14), the first toothing formation (20) and the second toothing formation (34) permitting a relative rotatability between the first hub arrangement (14) and the second hub arrangement (30) about a rotational axis (A) in a first rotational angular range counter to the restoring action of a first damper element group (50), and having a third toothing formation (38),
- a third hub arrangement (56) having a fourth toothing formation (62) which is in meshing engagement with the third toothing formation (38) of the second hub arrangement (30), the third toothing formation (38) and the fourth toothing formation (62) permitting a relative rotatability between the second hub arrangement (30) and the third hub arrangement (56) about the rotational axis (A) in a second rotational angular range counter to the restoring action of a second damper element group (74), the third hub arrangement (56) interacting, furthermore, with a third damper element group (88), with the result that the third hub arrangement (56) can be rotated about the rotational axis (A) with regard to a torque transmission assembly (89), counter to the restoring action of the third damper element group (88),
**characterized in that** the first hub arrangement (14) has a first supporting formation (26) for the first damper element group (50) and the second hub arrangement (30) has a second supporting formation (44) for the first damper element group (50), the first supporting formation (26) being arranged so as to follow the first toothing formation (20) axially and/or the second supporting formation (44) being arranged so as to follow the second toothing formation (34) axially.

2. Torsional vibration damper, in particular for a clutch plate, comprising:
- a first hub arrangement (14) having a first toothing formation (20),
- a second hub arrangement (30) having a second toothing formation (34) which is in meshing engagement with the first toothing formation (20) of the first hub arrangement (14), the first toothing formation (20) and the second toothing formation (34) permitting a relative rotatability between the first hub arrangement (14) and the second hub arrangement (30) about a rotational axis (A) in a first rotational angular range counter to the restoring action of a first damper element group (50), and having a third toothing formation (38),
- a third hub arrangement (56) having a fourth toothing formation (62) which is in meshing engagement with the third toothing formation (38) of the second hub arrangement (30), the third toothing formation (38) and the fourth toothing formation (62) permitting a relative rotatability between the second hub arrangement (30) and the third hub arrangement (56) about the rotational axis (A) in a second rotational angular range counter to the restoring action of a second damper element group (74), the third hub arrangement (56) interacting, furthermore, with a third damper element group (88), with the result that the third hub arrangement (56) can be rotated about the rotational axis (A) with regard to a torque transmission assembly (89), counter to the restoring action of the third damper element group (88),
**characterized in that** the second hub arrangement (30) has a third supporting formation (52) for the second damper element group (74) and the third hub arrangement (56) has a fourth supporting formation (68) for the second damper element group (74), the third supporting formation (52) being arranged so as to follow the third toothing formation (38) axially and/or the fourth supporting formation (68) being arranged so as to follow the fourth toothing formation (62) axially.

3. Torsional vibration damper according to either of Claims 1 and 2, **characterized in that**, by way of a toothing region (32) which has the second toothing formation (34), the second hub arrangement (30) surrounds the first hub arrangement (14) radially on the outside in its toothing region (18) which has the first toothing formation (20).

4. Torsional vibration damper according to one of Claims 1 to 3, **characterized in that**, by way of its toothing region (60) which has the fourth toothing formation (62), the third hub arrangement (56) surrounds the second hub arrangement (30) radially on the outside in its toothing region (32) which has the third toothing formation (38).

5. Torsional vibration damper according to one of Claims 1 to 4, **characterized in that** the second hub arrangement (30) has a toothing region (32) which has the second toothing formation (34) on a radial inner side and has the third toothing formation (38) on a radial outer side.

6. Torsional vibration damper according to one of Claims 1 to 5, **characterized in that** the third hub arrangement (56) has a fifth toothing formation (76) in a toothing region (60), and **in that** a coupling element (80) of the third hub arrangement (56), which coupling element (80) interacts with the third damper element group (88), has a sixth toothing formation (83) which is in meshing engagement with the fifth toothing formation (76), substantially without rotational movement play.

7. Torsional vibration damper according to Claim 2, **characterized in that** the first hub arrangement (14) has a first supporting formation (26) for the first damper element group (50), and the second hub arrangement (30) has a second supporting formation (44) for the first damper element group (50), the first supporting formation (26) being arranged so as to follow the first toothing formation (20) axially and/or the second supporting formation (44) being arranged so as to follow the second toothing formation (34) axially.

8. Torsional vibration damper according to Claim 1 or 7, **characterized in that** the second supporting formation (44) surrounds the first supporting formation (26) radially on the outside.

9. Torsional vibration damper according to Claim 1 or either of Claims 7 and 8, **characterized in that** the first hub arrangement (14) has a toothing region (18) and a supporting region (24) which are connected integrally to one another.

10. Torsional vibration damper according to Claim 7 or 8, **characterized in that** the first hub arrangement (14) has a toothing region (18) and a supporting region (24) which are provided on components which are configured separately from one another.

11. Torsional vibration damper according to one of Claims 7 to 10, **characterized in that** the second hub arrangement (30) has a toothing region (32) which has the second toothing formation (34) and the third toothing formation (38), and has a supporting region (42) which has at least the second supporting formation (44), which are connected integrally to one another.

12. Torsional vibration damper according to one of Claims 7 to 10, **characterized in that** the second hub arrangement (30) has a toothing region (32) which has the second toothing formation (34) and the third toothing formation (38), and has a supporting region (42) which has at least the second supporting formation (44), which are provided on components which are configured separately from one another.

13. Torsional vibration damper according to Claim 1, **characterized in that** the second hub arrangement (30) has a third supporting formation (52) for the second damper element group (74) and the third hub arrangement (56) has a fourth supporting formation (68) for the second damper element group (74), the third supporting formation (52) being arranged so as to follow the third toothing formation (38) axially and/or the fourth supporting formation (68) being arranged so as to follow the fourth toothing formation (62) axially.

14. Torsional vibration damper according to Claim 2 or 13, **characterized in that** the fourth supporting formation (68) surrounds the third supporting formation (52) radially on the outside.

15. Torsional vibration damper according to Claim 2 or either of Claims 13 and 14, **characterized in that** the second hub arrangement (30) has a toothing region (32) which has the second toothing formation (34) and the third toothing formation (38), and has a supporting region (42) which has at least the third supporting formation (52), which are connected integrally to one another.

16. Torsional vibration damper according to Claim 2 or either of Claims 13 and 14, **characterized in that** the second hub arrangement (30) has a toothing region (32) which has the second toothing formation (34) and the third toothing formation (38), and has a supporting region (42) which has at least the third supporting formation (52), which are provided on components which are configured separately from one another.

17. Torsional vibration damper according to Claim 2 or one of Claims 13 to 16, **characterized in that** the third hub arrangement (56) has a toothing region (60) which has at least the fourth toothing formation (62) and a supporting region (66) which has the fourth supporting formation (68), which are connected integrally to one another.

18. Torsional vibration damper according to Claim 2 or one of Claims 13 to 16, **characterized in that** the third hub arrangement (56) has a toothing region (60) which has at least the fourth toothing formation (62) and a supporting region (66) which has the fourth supporting formation (68), which are provided on components which are configured separately from one another.

19. Torsional vibration damper according to one of Claims 1 to 18, **characterized in that** a permanently active friction device (90, 104, 110) acts between the first hub arrangement (14) and the second hub arrangement (30) and/or between the second hub arrangement (30) and the third hub arrangement (56) and/or between the third hub arrangement (56) and the torque transmission assembly (89).

20. Torsional vibration damper according to one of Claims 1 to 19, **characterized in that** a delayed-action friction device (96) acts between the first hub arrangement (14) and the second hub arrangement (30) and/or between the second hub arrangement (30) and the third hub arrangement (56) and/or between the third hub arrangement (56) and the torque transmission assembly (89).

21. Clutch plate, comprising a torsional vibration damper (12) according to one of the preceding claims, the torque transmission assembly (89) carrying friction linings (86) and the first hub arrangement (14) being configured for rotationally fixed coupling to an output shaft.

## Revendications

1. Dispositif amortisseur de torsion, en particulier pour un disque d'embrayage, comprenant :
- un premier agencement de moyeu (14) avec une première formation de denture (20),
- un deuxième agencement de moyeu (30) avec une deuxième formation de denture (34), qui est en prise par imbriquement avec la première formation de denture (20) du premier agencement de moyeu (14), la première formation de denture (20) et la deuxième formation de denture (34) permettant une rotation relative entre le premier agencement de moyeu (14) et le deuxième agencement de moyeu (30) autour d'un axe de rotation (A) dans une première plage d'angle de rotation à l'encontre de l'effet de rappel d'un premier groupe d'éléments amortisseurs (50), et comprenant une troisième formation de denture (38),
- un troisième agencement de moyeu (56) avec une quatrième formation de denture (62) qui est en prise par imbriquement avec la troisième formation de denture (38) du deuxième agencement de moyeu (30), la troisième formation de denture (38) et la quatrième formation de denture (62) permettant une rotation relative entre le deuxième agencement de moyeu (30) et le troisième agencement de moyeu (56) autour de l'axe de rotation (A) dans une deuxième plage d'angle de rotation à l'encontre de l'effet de rappel d'un deuxième groupe d'éléments amortisseurs (74), le troisième agencement de moyeu (56) coopérant en outre avec un troisième groupe d'éléments amortisseurs (88) de sorte que le troisième agencement de moyeu (56) puisse tourner autour de l'axe de rotation (A) à l'encontre de l'effet de rappel du troisième groupe d'éléments amortisseurs (88) par rapport à un module de transfert de couple (89),
**caractérisé en ce que** le premier agencement de moyeu (14) présente une première formation de support (26) pour le premier groupe d'éléments amortisseurs (50) et le deuxième agencement de moyeu (30) présente une deuxième formation de support (44) pour le premier groupe d'éléments amortisseurs (50), la première formation de support (26) étant disposée de manière à suivre axialement la première formation de denture (20) et/ou la deuxième formation de support (44) étant disposée de manière à suivre axialement la deuxième formation de denture (34).

2. Dispositif amortisseur de torsion, en particulier pour un disque d'embrayage, comprenant :
- un premier agencement de moyeu (14) avec une première formation de denture (20),
- un deuxième agencement de moyeu (30) avec une deuxième formation de denture (34), qui est en prise par imbriquement avec la première formation de denture (20) du premier agencement de moyeu (14), la première formation de denture (20) et la deuxième formation de denture (34) permettant une rotation relative entre le premier agencement de moyeu (14) et le deuxième agencement de moyeu (30) autour d'un axe de rotation (A) dans une première plage d'angle de rotation à l'encontre de l'effet de rappel d'un premier groupe d'éléments amortisseurs (50), et comprenant une troisième formation de denture (38),
- un troisième agencement de moyeu (56) avec une quatrième formation de denture (62) qui est en prise par imbriquement avec la troisième formation de denture (38) du deuxième agencement de moyeu (30), la troisième formation de denture (38) et la quatrième formation de denture (62) permettant une rotation relative entre le deuxième agencement de moyeu (30) et le troisième agencement de moyeu (56) autour de l'axe de rotation (A) dans une deuxième plage d'angle de rotation à l'encontre de l'effet de rappel d'un deuxième groupe d'éléments amortisseurs (74), le troisième agencement de moyeu (56) coopérant en outre avec un troisième groupe d'éléments amortisseurs (88) de sorte que le troisième agencement de moyeu (56) puisse tourner autour de l'axe de rotation (A) à l'encontre de l'effet de rappel du troisième groupe d'éléments amortisseurs (88) par rapport à un module de transfert de couple (89),
**caractérisé en ce que** le deuxième agencement de moyeu (30) présente une troisième formation de support (52) pour le deuxième groupe d'éléments amortisseurs (74) et le troisième agencement de moyeu (56) présente une quatrième formation de support (68) pour le deuxième groupe d'éléments amortisseurs (74), la troisième formation de support (52) étant disposée de manière à suivre axialement la troisième formation de denture (38) et/ou la quatrième formation de support (68) étant disposée de manière à suivre axialement la quatrième formation de denture (62).

3. Dispositif amortisseur de torsion selon l'une quelconque des revendications 1 ou 2, **caractérisé en ce que** le deuxième agencement de moyeu (30), avec une région de denture (32) présentant la deuxième formation de denture (34), entoure radialement à l'extérieur le premier agencement de moyeu (14) dans sa région de denture (18) présentant la première formation de denture (20).

4. Dispositif amortisseur de torsion selon l'une quelconque des revendications 1 à 3, **caractérisé en ce que** le troisième agencement de moyeu (56), avec sa région de denture (60) présentant la quatrième formation de denture (62), entoure radialement à l'extérieur le deuxième agencement de moyeu (30) dans sa région de denture (32) présentant la troisième formation de denture (38).

5. Dispositif amortisseur de torsion selon l'une quelconque des revendications 1 à 4, **caractérisé en ce que** le deuxième agencement de moyeu (30) présente une région de denture (32) qui présente sur un côté radial interne la deuxième formation de denture (34) et qui présente sur un côté radial externe la troisième formation de denture (38).

6. Dispositif amortisseur de torsion selon l'une quelconque des revendications 1 à 5, **caractérisé en ce que** le troisième agencement de moyeu (56) présente, dans une région de denture (60), une cinquième formation de denture (76) et **en ce qu'**un élément de couplage (80) du troisième agencement de moyeu (56) coopérant avec le troisième groupe d'éléments amortisseurs (88) présente une sixième formation de denture (83), qui est en prise par imbriquement avec la cinquième formation de denture (76) essentiellement sans jeu de mouvement de rotation.

7. Dispositif amortisseur de torsion selon la revendication 2, **caractérisé en ce que** le premier agencement de moyeu (14) présente une première formation de support (26) pour le premier groupe d'éléments amortisseurs (50) et le deuxième agencement de moyeu (30) présente une deuxième formation de support (44) pour le premier groupe d'éléments amortisseurs (50), la première formation de support (26) étant disposée de manière à suivre axialement la première formation de denture (20) et/ou la deuxième formation de support (44) étant disposée de manière à suivre axialement la deuxième formation de denture (34).

8. Dispositif amortisseur de torsion selon la revendication 1 ou 7, **caractérisé en ce que** la deuxième formation de support (44) entoure radialement à l'extérieur la première formation de support (26).

9. Dispositif amortisseur de torsion selon la revendication 1 ou l'une quelconque des revendications 7 et 8, **caractérisé en ce que** le premier agencement de moyeu (14) présente une région de denture (18) et une région de support (24), qui sont connectées intégralement l'une à l'autre.

10. Dispositif amortisseur de torsion selon la revendication 7 ou 8, **caractérisé en ce que** le premier agencement de moyeu (14) présente une région de denture (18) et une région de support (24) qui sont prévues sur des composants configurés séparément l'un de l'autre.

11. Dispositif amortisseur de torsion selon l'une quelconque des revendications 7 à 10, **caractérisé en ce que** le deuxième agencement de moyeu (30) présente une région de denture (32) présentant la deuxième formation de denture (34) et la troisième formation de denture (38) et une région de support (42) présentant au moins la deuxième formation de support (44), qui sont connectées intégralement l'une à l'autre.

12. Dispositif amortisseur de torsion selon l'une quelconque des revendications 7 à 10, **caractérisé en ce que** le deuxième agencement de moyeu (30) présente une région de denture (32) présentant la deuxième formation de denture (34) et la troisième formation de denture (38) et une région de support (42) présentant au moins la deuxième formation de support (44), qui sont prévues sur des composants configurés séparément l'un de l'autre.

13. Dispositif amortisseur de torsion selon la revendication 1, **caractérisé en ce que** le deuxième agencement de moyeu (30) présente une troisième formation de support (52) pour le deuxième groupe d'éléments amortisseurs (74) et le troisième agencement de moyeu (56) présente une quatrième formation de support (68) pour le deuxième groupe d'éléments amortisseurs (74), la troisième formation de support (52) étant disposée axialement à la suite de la troisième formation de denture (38) et/ou la quatrième formation de support (68) étant disposée axialement à la suite de la quatrième formation de denture (62).

14. Dispositif amortisseur de torsion selon la revendication 2 ou 13, **caractérisé en ce que** la quatrième formation de support (68) entoure radialement à l'extérieur la troisième formation de support (52).

15. Dispositif amortisseur de torsion selon la revendication 2 ou l'une quelconque des revendications 13 ou 14, **caractérisé en ce que** le deuxième agencement de moyeu (30) présente une région de denture (32) présentant la deuxième formation de denture (34) et la troisième formation de denture (38) et une région de support (42) présentant au moins la troisième formation de support (52), lesquelles sont connectées intégralement l'une à l'autre.

16. Dispositif amortisseur de torsion selon la revendication 2 ou l'une quelconque des revendications 13 ou 14, **caractérisé en ce que** le deuxième agencement de moyeu (30) présente une région de denture (32) présentant la deuxième formation de denture (34) et la troisième formation de denture (38), et une région de support (42) présentant au moins la troisième formation de support (52), lesquelles sont prévues sur des composants réalisés séparément l'un de l'autre.

17. Dispositif amortisseur de torsion selon la revendication 2 ou l'une quelconque des revendications 13 à 16, **caractérisé en ce que** le troisième agencement de moyeu (56) présente une région de denture (60) présentant au moins la quatrième formation de denture (62) et une région de support (66) présentant la quatrième formation de support (68), lesquelles sont connectées intégralement l'une à l'autre.

18. Dispositif amortisseur de torsion selon la revendication 2 ou l'une quelconque des revendications 13 à 16, **caractérisé en ce que** le troisième agencement de moyeu (56) présente une région de denture (60) présentant au moins la quatrième formation de denture (62) et une région de support (66) présentant la quatrième formation de support (68), lesquelles sont prévues sur des composants réalisés séparément l'un de l'autre.

19. Dispositif amortisseur de torsion selon l'une quelconque des revendications 1 à 18, **caractérisé en ce qu'**entre le premier agencement de moyeu (14) et le deuxième agencement de moyeu (30) et/ou entre le deuxième agencement de moyeu (30) et le troisième agencement de moyeu (56) et/ou entre le troisième agencement de moyeu (56) et le module de transfert de couple (89) agit un dispositif de frottement à action permanente (90, 104, 110).

20. Dispositif amortisseur de torsion selon l'une quelconque des revendications 1 à 19, **caractérisé en ce qu'**entre le premier agencement de moyeu (14) et le deuxième agencement de moyeu (30) et/ou entre le deuxième agencement de moyeu (30) et le troisième agencement de moyeu (56) et/ou entre le troisième agencement de moyeu (56) et le module de transfert de couple (89) agit un dispositif de frottement (96) à effet retardé.

21. Disque d'embrayage, comprenant un dispositif amortisseur de torsion (12) selon l'une quelconque des revendications précédentes, dans lequel le module de transfert de couple (89) porte des garnitures de frein (86) et le premier agencement de moyeu (14) est réalisé pour l'accouplement solidaire en rotation sur un arbre de sortie.
